(19) Europäisches Patentamt
European Patent Office
Office européen des brevets

(11) Publication number: **0 012 513**
**B1**

(12) **EUROPEAN PATENT SPECIFICATION**

(45) Date of publication of patent specification: **28.07.82**

(21) Application number: **79302567.7**

(22) Date of filing: **14.11.79**

(51) Int. Cl.[3]: **C 08 J 7/04,** C 09 D 3/74, C 08 L 79/00, C 08 L 27/08, C 08 K 5/05, C 08 K 5/06

(54) **Thermoplastic coated films with anti-static properties.**

(30) Priority: **18.12.78 US 970719**

(43) Date of publication of application:
**25.06.80 Bulletin 80/13**

(45) Publication of the grant of the patent:
**28.07.82 Bulletin 82/30**

(84) Designated Contracting States:
**BE DE FR GB IT NL**

(56) References cited:
**DE - B - 1 794 312**
**GB - A - 1 136 130**
**GB - A - 1 176 663**
**US - A - 3 485 653**

(73) Proprietor: **MOBIL OIL CORPORATION**
**150 East 42nd Street**
**New York New York 10017 (US)**

(72) Inventor: **Steiner, Robert Henry**
**39 Winding Road**
**Rochester New York 14618, Monroe County (US)**
Inventor: **Touhsaent, Robert Edward**
**5 Dahlia Drive**
**Fairport New York 14450, Monroe County (US)**

(74) Representative: **Cooper, John Anthony**
**Mobil Court 3 Clements Inn**
**London WC2A 2EB (GB)**

**EP 0 012 513 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Thermoplastic coated films with anti-static properties

The employment of copolymers of vinylidene chloride, (referred to below as "PVDC") as coatings for oriented polypropylene materials has been recognized as an effective means for increasing the resistance of such films to the transmission of gases and vapors, such as oxygen and moisture vapor. Additionally, such coating materials are known to promote the heat sealability of such oriented films which, in an uncoated state, tend to seal only with great difficulty, if at all. PVDC coated oriented polypropylene is a particularly good packaging material for products which tend to be sensitive to attack by oxygen such as, for example, coffee and cheese. However, such coated plastic materials have a tendency to develop a static charge when used on packaging equipment. This has been an obstacle particularly when packaging ground coffee and other particulate products in that the static charge developed on the film tends to attract the product to the seal area thus preventing the packaging film from effectively sealing to itself in a continuous manner.

In the past, coated packaging films of this type have been produced by subjecting the surface of an oriented film to a corona discharge treatment to improve its receptivity, i.e., bonding characteristics, to the coatings which are subsequently applied. Other surface pretreatment techniques which may be employed include flame treatment or treatment with oxidizing chemicals such as chromic acid. The treated oriented polypropylene may then be coated with a thin layer of a primer material which serves to enhance the adherence of the topcoat layer. Primers which have been used in the past include polyurethane dissolved in organic solvents; see, for example, U.S. Patent No. 3,023,125. Alternatively, the PVDC topcoating may, in certain instances, be applied directly on the treated film surface without the use of a special primer coating.

Conventional anti-static agents for plastic films such as glycerylmonostearate and high molecular weight secondary or tertiary amines, e.g. U.S. Patent No. 3,663,488, have been found to be impractical for use in coated films. In the first place, they are difficult to disperse uniformly in aqueous latex coatings and secondly, they destroy the essential heat seal properties of the resultant films. In contrast, the coated films prepared in accordance with the present invention exhibit excellent heat seal properties.

Water soluble non-ionic surface active agents such as nonylphenoxy poly (ethylene oxide) have been claimed to be effective anti-static additives when admixed with a PVDC topcoat on a modified polypropylene base sheet but these destroy heat sealability when applied to a base sheet wholly of polypropylene (Japanese Patent Nos. 49/38021 and 52/50232).

British Patent No. 974,116 teaches the use of cationic surface active agents as anti-static additives for polymeric coatings for polyolefin films, specifically quaternary ammonium compounds. However, these materials exhibit high levels of toxicity and their use in packaging films for food products is not acceptable.

British Patent No. 1136130 describes the use of primer layers comprising reaction products of oxyranes with alkylene imines for topcoats of PVDC. These films will, however, be deficient in anti-static properties because no anti-static additive is said to be present in the topcoat. U.S. Patent No. 3,485,653 describes heat sealable polyolefin films with a polyalkyleneimine primer layer and a topcoat of PVDC with an epoxy resin. Again, these films will be deficient in anti-static properties.

The use of poly (ethyleneimine) as a primer or adhesive for polymeric coatings on film substrates such as regenerated cellulose or polyolefins is well known and is disclosed, for example, in British Patent Nos. 766827 and 910875 and U.S. Patent No. 3,230,135.

We have now found that films having good resistance to the transmission of oxygen and water vapor together with good heat sealability and anti-static properties may be produced by the use of certain water-soluble non-ionic polyhydroxy organic compounds as anti-static additives in PVDC topcoats. The topcoat may be adhered to the film substrate by means of a polyethylene imine (PEI) primer coating.

The water soluble polyols which are used in the PVDC topcoat are of four types:

(a) Low molecular weight glycols such as ethylene glycol; 1,2-propylene glycol; 1,3-propylene glycol and 1,4-butane diol.
(b) Low molecular weight polymerized glycols containing up to 8 ethylene oxide units such as di (ethylene glycol), tri (ethylene glycol), tetra (ethylene glycol) and di (propylene glycol).
(c) Triols and higher polyols such as glycerol, tetra-hydroxy butane and pentaerythritol.
(d) Poly (ethylene oxide) adducts of the formula:

$$RO(CH_2CH_2O)_xH$$

where
$x$=8—30 and
R=a non polar radical such as nonylphenyl or sorbitan stearate.

The exact mechanism for the high levels of anti-static activities for the non-ionic anti-static additives employed in the present coating compositions is not completely understood. It may be theorized, however, that the increased anti-static activity may result from the fact that the

particular materials employed in the present invention may act as humectants, i.e., materials which can retain and hold liquids such as water.

Other adhesive materials such as epoxy resins may be used in conjunction with the poly (ethylene imine) in the primer layer, but it is an essential feature that PEI be present in the subcoat. The amount of PEI deposited on the film is difficult to measure directly as it is so minute. It is estimated that the concentration on the film surface is in the range of 0.8 to 8 mg.m$^{-2}$ (0.5 to 5 mg. per 1000 sq.in) of film surface.

It has been found that the presence of PEI even in this small amount in the intermediate layer between the substrate film (usually oriented polypropylene film) and the PVDC topcoating will confer a moderate degree of anti-static activity to the resultant film. The addition of the water soluble anti-static additives described above to the latex composition greatly enhances the ability of the film to dissipate accumulated electrostatic charges at rapid rates. The amount of water soluble polyol material required to achieve good anti-static properties may range from 0.1 to 10% of the polymer content of the coating latex. More specifically, a range of 0.5 to 5%. The preferred range is from 1.0% to 4%.

The specific composition of the vinylidene chloride copolymer latex which is employed as a topcoating material is not critical. Commercially available PVDC latexes having a vinylidene chloride content of at least 50% and preferably from 75% to 95% may be employed. Latexes of this type are available under the trademark "Saran". The other ethylenically unsaturated comonomers which may be employed in the copolymer topcoat include alpha-beta ethylenically unsaturated acids such as acrylic and methacrylic acids; alkyl esters containing 1—18 carbon atoms of such acids such as methyl methacrylate, ethyl acrylate, butyl acrylate; alpha-beta ethylenically unsaturated nitriles such as acrylonitrile, methacrylonitrile; monovinyl aromatic compounds such as styrene; and vinyl chloride.

Any of a number of well known coating additives may also be incorporated in the PVDC topcoat. Adjuvants such as carnauba wax, employed to promote cold slip and reduce blocking tendencies; additionally materials such as talc employed to improve the frictional characteristics of the film surface, and many other materials may be added to the particular latex to achieve the desired coating characteristics.

The amount of vinylidene chloride coating applied to the substrate film may be varied over a wide range depending upon the specific properties desired in the final film product. Coating weights of from 1.6 to 9.3 mg.m$^{-2}$ (1 to 6 grams per 1000 sq.ins.) may be used. If a two-side coated film is desired the treating/priming/topcoating process can be repeated either in line or out of line.

Examples

The anti-static activity of the coated film structures produced in the following examples was measured on a device in which a film sample is mounted on an electrically shielded cabinet in which the environmental conditions of temperature and relative humidity are closely controlled. An electrical charge is impressed on the film by means of an electrical discharge source. The charge on the film surface is measured by means of an electrometer and recorded continuously on a chart recorder. The initial charge ($E_0$) in kilovolts is measured at the time the external charging is discontinued. Typically, polyolefin films exhibit an $E_0$ value in the range of 4—5 kilovolts. The impressed charge decays asymptotically at a rate indicative of the anti-static activity of the film. The time required for the $E_0$ value to decay by 50% is termed the static half-life (T 1/2) of the film. Measurement of the electrostatic charge is continued for three minutes, at which time a final value ($E_{3'}$) is recorded. Generally, film with poor anti-static properties still exhibit a substantial $E_{3'}$ value, typically greater than 50% of $E_0$. The half-lives of such films are reported as "greater than three minutes" and generally these films would be unsatisfactory in packaging machine operations. Films exhibiting T 1/2 values in the range of 0.5 to 1.0 minutes at a relative humidity of about 60% at 25°C are considered to be fair and may be usable under certain circumstances. Films which exhibit T 1/2 values of less than 0.5 minute are considered to be excellent.

In the following Examples 1—19, biaxially oriented polypropylene film with an average thickness of 18 microns (0.75 mils) was used. It was treated by the conventional corona discharge technique to produce a surface with a wetting tension of about 42 dynes/cm.

In Examples 1 and 2, no primer was used, the compounded latex being applied directly to the corona treated film. In the first case, no anti-static additive was included; in the second, 2.5% of propylene glycol based on vinylidene chloride polymer was added. As can be seen from the data in Table 1, both films showed very little decay of static charge over the three minute duration of the test. In Examples 3 and 4, a standard solvent-based urethane primer was used, with and without propylene glycol. Again, both films showed very little anti-static activity.

In Example 5, a dilute aqueous solution of PEI was used as a primer. The amount deposited on the film was too small to be measured by conventional analytical methods, but was estimated to be about 1.6 mg.m.$^{-2}$ (0.001 grams per 1000 sq.ins) of film surface. Note that the time required for the initial static charge to decay by one half is reduced to about 0.6

minute from the times of more than three minutes shown by the films of Examples 1—4.

Example 6, was a duplicate of Example 5 except that 2.5 phr of propylene glycol was added to the topcoat. Note the reduction in static half-life to 0.1 minute.

Examples 7—19 show the effect of other water soluble polyols and non-ionic surfactants in reducing the static half-lives.

The vinylidene chloride multipolymer latex used in Examples 7—19 was a typical broad heat sealing range PVDC which exhibits good resistance to the transmission of gaseous oxygen and is heat sealable at low temperature.

Example 1

A biaxially oriented polypropylene film with an average thickness of about 18 microns (0.75 mils) was corona discharge treated in accordance with commonly employed techniques to produce a surface with a wetting tension of about 42 dynes/cm. A PVDC topcoating ("Saran"—trademark) was formulated as follows: a latex containing about 54% by weight of a multipolymer comprising about 92% vinylidene chloride, 5% acrylonitrile and 3% methyl acrylate was adjusted to a pH of 8 with ammonia and blended with an aqueous dispersion of finely divided carnauba wax (3 weight per cent wax on polymer solids). This PVDC polymer is a high barrier polymer, exhibit excellent resistance to the transmission of gaseous oxygen. This mixture was diluted to 40% solids and applied continuously to the treated base film by a gravure roll. The coating was dried continuously in an air oven at 115°C (240°F) with a dwell time of 8.6 seconds. The essentially dry coated film (coating weight of 3.1 $mg.m^{-2}$ (2 g/1000 sq.ins.)) was wound into a roll and tested for anti-static propensity, which, as shown in Table 1, was very poor.

Example 2

The procedure of Example 1 was repeated, except that 2.0% of propylene glycol, based on the PVDC multipolymer solids, was added to the coating mixture. Again, as shown in Table 1, very poor static properties were observed.

Example 3

Oriented polypropylene film, treated as in Example 1, was primed with an 8% by weight solids solution of a commercially available polyurethane adhesive (Morton 76FE62 from Morton Chemical Co.—"Morton" is a trademark) in methyl ethyl ketone using a gravure roll technique. The dried primed film was topcoated with the PVDC formulation described in Example 1. Again, very poor static properties were exhibited.

Example 4

Film, primed as in Example 3, was topcoated with the PVDC formulation of Example 2. Very poor static properties were observed.

Example 5

Treated film was precoated with a solution of 0.1 weight per cent PEI (Polymin M—trademark—a product of BASF—Wyandotte Corp.) in water using a 200 U.S. mesh quadrigravure roll. The film was dried in an air oven at 99°C (210°F) with a residence time of six seconds. The coating weight was too low to be measured, but was calculated to be in the range of 0.0016 $mg.m^{-2}$ (0.001 grams/1000 sq.ins.). The PVDC topcoat of Example 1 was applied to this primed film and was found to have a half-life of less than one minute.

Example 6

The primed film of Example 5 was combined with the topcoat of Example 2. The half-life was reduced to about 0.1 minute and represents an excellent film for commercial packaging applications.

Example 7

A PVDC latex containing about 46% by weight of a multipolymer comprising about 80% vinylidene chloride, 5% acrylic acid, and 15% ethyl acrylate was adjusted to a pH of 4 with ammonium hydroxide. It was blended with an acid-stable dispersion of carnauba wax (6% wax solids based on polymer solids) and 0.5% by weight of finely divided talc. About 2.5% by weight, based on the polymer solids, of propylene glycol was then added. This compounded latex was applied to PEI primed oriented polypropylene film by the technique described in Example 1. The excellent T 1/2 value indicates the usefulness of polyol additives with sealable PVDC polymers as well as high barrier polymers exemplified in Examples 1—6.

Examples 8 through 19

The procedure of Example 7 was followed except that other polyols, as identified in Table 1, were employed.

TABLE 1

| Example | Primer | PVDC Type | Polyol Additive | $E_0$ | Static Properties T 1/2 (minutes) | $E_{3'}$ |
|---|---|---|---|---|---|---|
| 1 | none | HB (*) | none | 4.5 | >3 | 4.3 |
| 2 | none | HB | 2% PG | 4.3 | >3 | 2.8 |
| 3 | urethane | HB | none | 4.4 | >3 | 4.3 |
| 4 | urethane | HB | 2% PG | 4.4 | >3 | 4.0 |
| 5 | PEI | HB | none | 4.85 | 0.6 | 1.15 |
| 6 | PEI | HB | 2% PG | 2.55 | 0.1 | 0.05 |
| 7 | PEI | S | 2% PG | 3.32 | 0.1 | 0.12 |
| 8 | PEI | S | 1% PG | 4.15 | 0.5 | 1.0 |
| 9 | PEI | S | 4% PG | 2.63 | 0.1 | 0.10 |
| 10 | PEI | S | 2.5% EG | 3.4 | 0.1 | 0.05 |
| 11 | PEI | S | 2.5% DEG | 4.65 | 0.5 | 0.85 |
| 12 | PEI | S | 2.5% TrEG | 1.9 | 0.1 | 0.1 |
| 13 | PEI | S | 2.5% TeEG | 2.45 | 0.1 | 0.5 |
| 14 | PEI | S | 2.5% PEG-400 | 4.8 | 0.3 | 0.55 |
| 15 | PEI | S | 2.5% PEG-600 | 5.45 | 0.6 | 1.20 |
| 16 | PEI | S | 2.5% Glycerol | 4.2 | 0.4 | 0.7 |
| 17 | PEI | S | 2.5% BDO | 3.75 | 0.1 | 0.10 |
| 18 | PEI | S | 2.5% CO-630 | 4.80 | 0.1 | 0.25 |
| 19 | PEI | S | 2.5% TW-60 | 4.85 | 0.4 | 0.65 |

(*) For key to abbreviations employed in Table 1 see following Abbreviation Table.

ABBREVIATION TABLE

HB = high barrier
S = sealable
EG = ethylene glycol
PG = 1,2-propylene glycol
DEG = di (ethylene glycol)
TrEG = tri (ethylene glycol)
TeEG = tetra (ethylene glycol)
PEG400 = poly (ethylene glycol), molecular weight=400
PEG600 = poly(ethylene glycol), molecular weight=600
BDC = 1,4-butane diol
CO-630 = Igepal Co-630: $C_4H_9—C_6H_5O(CH_2CH_2O)_{12}H$ ("Igepal" is a trademark)
Tw-60 = Tween 60: Sorbitan stearate — $(CH_2CH_2O)_{20}H$ ("Tween" is a trademark)

It will be understood that although PVDC materials employed in the preceding examples have been characterized as being either "high barrier" or "heat sealable", both the PVDC materials employed exhibit both barrier and heat sealable characteristics. However, these terms do indicate that some PVDC materials exhibit higher barrier characteristics than others and that some exhibit better heat sealable characteristics than others.

## Claims

1. A heat sealable thermoplastic film comprising a film substrate having on at least one surface a coating of (i) a primer coating comprising poly (ethyleneimine) and (ii) a topcoating on the primer coating which comprises a vinylidene chloride polymer in admixture with 0.1 to 10 percent by weight of the topcoating of an anti-static additive selected from (a) low molecular weight glycols, (b) low molecular weight polymerized glycols containing up to 8 ethylene oxide units, (c) triols and higher polyols and (d) poly (ethylene oxide) adducts of the formula $RO(CH_2CH_2O)_xH$ where $x$ is 8 to 30 and R is a non polar radical.

2. A heat sealable film according to claim 1 in which the anti-static additive is present in an amount of 1 to 4% by weight of the topcoating.

3. A heat sealable film according to claim 1 or 2 in which the anti-static additive is ethylene glycol; 1,2-propylene glycol; 1,3-propylene glycol or 1,4-butane diol.

4. A heat sealable film according to claim 1 or 2 in which the anti-static additive is di(ethylene glycol), tri(ethylene glycol) tetra-(ethylene glycol) or di(propylene glycol).

5. A heat sealable film according to claim 1 or 2 in which the anti-static additive is glycerol, tetrahydroxy butane or pentaerythritol.

6. A heat sealable film according to claim 1 or 2 in which the anti-static additive is a poly-(ethylene oxide) adduct of nonyl phenyl stearate or sorbitan stearate.

7. A heat sealable film according to any of

claims 1 to 6 in which the film substrate comprises polypropylene film.

8. A heat sealable film according to claim 7 in which the film substrate comprises biaxially oriented polypropylene film.

**Patentansprüche**

1. Heißsiegelfähiger thermoplastischer Film, der ein Filmsubstrat umfaßt, das an wenigstens einer Oberfläche einen Überzug aus (i) einer Grundiermittelschicht, die Polyäthylenimin umfaßt und (ii) einer Oberschicht auf der Grundiermittelschicht aufweist, die ein Vinylidenchloridpolymeres im Gemisch mit 0,1 bis 10%, bezogen auf das Gewicht der Oberschicht, eines antistatischen Zusatzes enthält, der aus (a) Glykolen mit niedrigem Molekulargewicht, (b) polymerisierten Glykolen mit niedrigem Molekulargewicht, die bis zu 8 Äthylenoxideinheiten enthalten, (c) Triolen und höheren Polyolen und (d) Polyäthylenoxidaddukten der Formel

$$RO(CH_2CH_2O)_xH,$$

worin x 8 bis 30 und R ein nichtpolares Radikal ist, ausgewählt wird.

2. Heißsiegelfähiger Film nach Anspruch 1, bei dem der antistatische Zusatz in einer Menge von 1 bis 4%, bezogen auf das Gewicht der Oberschicht, vorhanden ist.

3. Heißsiegelfähiger Film nach Anspruch 1 oder 2, wobei der antistatische Zusatz Äthylenglykol; 1,2-Propylenglykol; 1,3-Propylenglykol oder 1,4-Butandiol ist.

4. Heißsiegelfähiger Film nach Anspruch 1 oder 2, wobei der antistatische Zusatz Di(äthylenglykol), Tri(äthylenglykol), Tetra(äthylenglykol) oder Di(propylenglykol) ist.

5. Heißsiegelfähiger Film nach Anspruch 1 oder 2, wobei der antistatische Zusatz Glyzerin, Tetrahydroxybutan oder Pentaerythrol ist.

6. Heißsiegelfähiger Film nach Anspruch 1 oder 2, wobei der antistatische Zusatz ein Poly(äthylenoxid)addukt des Nonylphenylstearats oder des Sorbitanstearats ist.

7. Heißsiegelfähiger Film nach einem der Ansprüche 1 bis 6, wobei das Filmsubstrat einen Polypropylenfilm umfaßt.

8. Heißsiegelfähiger Film nach Anspruch 4, wobei das Filmsubstrat einen biaxial orientierten Polypropylenfilm umfaßt.

**Revendications**

1. Film thermoplastique soudable à chaud comprenant un film substrat ayant sur au moins une surface un revêtement de (1) un revêtement d'apprêt comprenant une poly(éthylèneimine) et (2) une couche finale sur le revêtement d'apprêt qui comprend un polymère de chlorure de vinylidène en mélange avec 0,1 à 10% du poids de la couche finale d'un additif antistatique choisi parmi (a) les glycols de bas poids moléculaire, (b) les glycols polymérisés de bas poids moléculaire contenant jusqu'à 8 motifs d'éthylène, (c) les troils ou polyols supérieurs et (d) les composés d'addition de poly(oxyde d'éthylène) de formule

$$RO(CH_2CH_2O)_xH$$

où x a une valeur de 8 à 30 et R représente un radical non polaire.

2. Film soudable à chaud selon la revendication 1, dans lequel l'additif antistatique est présent à raison de 1 à 4% du poids de la couche finale.

3. Film soudable à chaud selon la revendication 1 ou 2, dans lequel l'additif antistatique est l'éthylèneglycol, le propylèneglycol-1,2, le propylèneglycol-1,3 ou le butanediol-1,4.

4. Film soudable à chaud selon l'une des revendications 1 ou 2, dans lequel l'additif antistatique est le di(éthylèneglycol), le tri(éthylèneglycol), le tétra(éthylèneglycol) ou le di(propylèneglycol).

5. Film soudable à chaud selon l'une des revendications 1 ou 2 dans lequel l'additif antistatiques est le glycérol, le tétrahydroxybutane ou le pentaérythritol.

6. Film soudable à chaud selon l'une des revendications 1 ou 2, dans lequel l'additif antistatique est un produit d'addition de poly(oxyde d'éthylène) du stéarate de nonylphényle ou du stéarate de sorbitanne.

7. Film soudable à chaud selon l'une quelconque des revendications 1 à, dans lequel le film substrat comprend un film de polypropylène.

8. Film soudable à chaud selon la revendication 7, dans lequel le film substrat comprend un film de polyéthylène à orientation biaxiale.